# EUROPEAN PATENT APPLICATION

(11) **EP 4 848 655 A1**
(43) Date of publication of application: **02.12.2026**
(21) Application number: 26179244.4
(22) Date of filing: 18.05.2026
(51) Int. Cl.: H04L 9/32, H04L 9/00, H04L 9/08, H04L 9/14

(54) **METHOD, APPARATUS, AND COMPUTER PROGRAM FOR BYPASSING VERIFICATION OF HOMOMORPHIC ENCRYPTION USING ZERO KNOWLEDGE PROOFS**

(30) Priority: 30.05.2025 KR 20250071344; 09.12.2025 KR 20250193693
(71) Applicant: Samsung SDS Co., Ltd., Seoul 05510 (KR); Seoul National University R&DB Foundation, Seoul 08826 (KR)
(72) Inventor: Han, Kyoohyung, 05510 Seoul (KR); Kim, Seongkwang, 05510 Seoul (KR); Lee, Byeonghak, 05510 Seoul (KR); Song, Yongsoo, 08826 Seoul (KR); Seo, Jinyeong, 08826 Seoul (KR); Hwang, Intak, 08826 Seoul (KR)
(74) Representative: Grünecker Patent- und Rechtsanwälte PartG mbB

(57) **Abstract**

The present disclosure relates to a method, apparatus, and computer program for bypassing verification of homomorphic encryption. A method for bypassing verification of homomorphic encryption of the present disclosure proposes a method including verifying a zero-knowledge proof for a homomorphic encryption public key and a symmetric-key encryption secret key encrypted using homomorphic encryption, and obtaining a homomorphic encryption message by performing a first operation with a symmetric-key encryption ciphertext (c) and the symmetric-key encryption secret key encrypted using homomorphic encryption as inputs.

## Description

### BACKGROUND OF THE INVENTION

### 1. Field of the invention

The present disclosure relates to a method, apparatus, and computer program for bypassing verification of homomorphic encryption (HE) and, more specifically, to a method, apparatus, and computer program for bypassing verification of homomorphic encryption in order to reduce the amount of communication or computation required during homomorphic encryption verification.

### 2. Description of the Prior Art

Homomorphic encryption (or encrypting using homomorphic encryption) is a fourth-generation public-key encryption technology that enables operations between encrypted messages (plaintext), and is composed of algorithms such as KeyGen^{HE}, EncSK^{HE}(msg, HE.sk), EncPK^{HE}(msg, HE.pk), Dec^{HE}(HE.ctx, HE.sk), and Eval^{HE}(F, HE.ctx, HE.pk), and includes schemes such as BGV(Brakerski-Gentry-Vaikuntanathan), BFV(Brakerski-Fan-Vercauteren), CKKS(Cheon-Kim-Kim-Song), and TFHE(Fast Fully Homomorphic Encryption over the Torus).

Various protocols based on homomorphic encryption (e.g., Secure Multi-Party Computation (MPC), Oblivious Pseudo Random Function (OPRF), etc.) require a verification process to confirm whether the homomorphic encryption ciphertext provided by the client to the server was generated through correct encryption procedures.

Zero-knowledge proofs (ZKPs) are typically used for this verification, but recent research indicates that generating zero-knowledge proofs for the encrypting process using homomorphic encryption may lead to a problem where it takes a considerably long time.

Furthermore, transciphering frameworks are technologies designed to reduce the amount of communication required when transmitting homomorphic encryption using a technique of converting symmetric-key encryption ciphertext into homomorphic encryption ciphertext. However, existing transciphering frameworks are designed to reduce the amount of communication consumed during homomorphic encryption transmission and are therefore difficult to apply to homomorphic encryption ciphertext verification.

That is, although there is a need for more effective measures to reduce the amount of communication or computation required for verification of homomorphic encryption, an appropriate solution has not yet been presented.

### SUMMARY OF THE INVENTION

The present disclosure has been made to solve the problems of the prior art described above and aims to provide a method, apparatus, and computer program for bypassing the verification of homomorphic encryption.

Furthermore, the present disclosure aims to provide a method, apparatus, and computer program for bypassing the verification of homomorphic encryption capable of reducing the time required for a zero-knowledge proof for the homomorphic encryption process.

Furthermore, the present disclosure aims to provide a method, apparatus, and computer program for bypassing the verification of homomorphic encryption capable of reducing the amount of communication required for a zero-knowledge proof for the homomorphic encryption process.

Furthermore, the present disclosure aims to provide a method, apparatus, and computer program for bypassing the verification of homomorphic encryption that decompose the verification process for homomorphic encryption ciphertext into an online process and an offline process through transciphering frameworks, and prevent the generation of a zero-knowledge proof during the online process.

Furthermore, the present disclosure aims to provide a method, apparatus, and computer program for bypassing the verification of homomorphic encryption capable of reducing the amount of communication or computation/communication required for a zero-knowledge proof depending on whether a transciphering framework is used.

The technical problems to be solved by the present disclosure are not limited to those mentioned above, and other technical problems not mentioned will be clearly understood by those skilled in the art to which the present disclosure pertains from the description in this specification.

According to the first aspect of the present disclosure, a method for bypassing verification of homomorphic encryption may include: verifying a zero-knowledge proof for a homomorphic encryption public key and a symmetric-key encryption secret key encrypted using homomorphic encryption; and obtaining a homomorphic encryption message by performing a first operation with a symmetric-key encryption ciphertext (c) and the symmetric-key encryption secret key encrypted using homomorphic encryption as inputs.

Here, the verifying of the zero-knowledge proof may be performed offline, and the obtaining of the homomorphic encryption message may be performed online.

Here, the symmetric-key encryption ciphertext may be obtained by encrypting an input message through the symmetric-key encryption secret key.

Here, the first operation may be an Eval^{HE}(E⁻¹(·, c)) algorithm operation.

Here, the symmetric-key encryption secret key encrypted using homomorphic encryption may be generated by generating a homomorphic encryption secret key, the homomorphic encryption public key, and the symmetric-key encryption secret key, and performing homomorphic encryption on the symmetric-key encryption secret key through the homomorphic encryption secret key or the homomorphic encryption public key to generate the symmetric-key encryption secret key encrypted using homomorphic encryption.

Here, the zero-knowledge proof may be generated to verify whether errors exist in the homomorphic encryption public key and the symmetric-key encryption secret key encrypted using homomorphic encryption.

Here, the symmetric-key encryption secret key encrypted using homomorphic encryption and the zero-knowledge proof may be generated offline.

According to the second aspect of the present disclosure, a method for bypassing verification of homomorphic encryption may include: verifying a zero-knowledge proof for a homomorphic encryption public key and a symmetric-key encryption secret key encrypted using homomorphic encryption; generating a keystream generation operation (F) encrypted using homomorphic encryption by performing a second operation with the symmetric-key encryption secret key encrypted using homomorphic encryption as an input; and obtaining a homomorphic encryption message by performing a third operation with a symmetric-key encryption ciphertext (c) and the keystream generation operation encrypted using homomorphic encryption as inputs.

Here, the verifying of the zero-knowledge proof and the generating of the keystream generation operation encrypted using homomorphic encryption may be performed offline, and the obtaining of the homomorphic encryption message may be performed online.

Here, the second operation may be an Eval^{HE}(F) algorithm operation, and the third operation may be an Eval^{HE}(⊕c) algorithm operation.

According to the third aspect of the present disclosure, a method for bypassing verification of homomorphic encryption may include: performing a second operation with a symmetric-key encryption secret key encrypted using homomorphic encryption as an input to generate a keystream generation operation (F) encrypted using homomorphic encryption; verifying a zero-knowledge proof for the keystream generation operation encrypted using homomorphic encryption; and obtaining a homomorphic encryption message by performing a third operation with a symmetric-key encryption ciphertext (c) and the keystream generation operation encrypted using homomorphic encryption as inputs.

Here, the generating of the keystream generation operation encrypted using homomorphic encryption and the verifying of the zero-knowledge proof may be performed offline, and the obtaining of the homomorphic encryption message may be performed online.

Here, the second operation may be an Eval^{HE}(F) algorithm operation, and the third operation may be an Eval^{HE}(⊕c) algorithm operation.

According to the third aspect of the present disclosure, there is provided a computer program stored on a medium for executing, in conjunction with hardware, the method of bypassing verification of homomorphic encryption.

According to the fourth aspect of the present disclosure, an apparatus for executing a method of bypassing verification of homomorphic encryption may include a processor, wherein the processor may be configured to: verify a zero-knowledge proof for a homomorphic encryption public key and a symmetric-key encryption secret key encrypted using homomorphic encryption; and obtain a homomorphic encryption message by performing a first operation with a symmetric-key encryption ciphertext (c) and the symmetric-key encryption secret key encrypted using homomorphic encryption as inputs.

Here, the verifying of the zero-knowledge proof may be performed offline, and the obtaining of the homomorphic encryption message may be performed online.

Here, the symmetric-key encryption ciphertext may be obtained by encrypting an input message through the symmetric-key encryption secret key.

Here, the first operation is an Eval^{HE}(E⁻¹(·, c)) algorithm operation.

Here, the symmetric-key encryption secret key encrypted using homomorphic encryption may be generated by: generating a homomorphic encryption secret key, the homomorphic encryption public key, and the symmetric-key encryption secret key; and performing homomorphic encryption on the symmetric-key encryption secret key through the homomorphic encryption secret key or the homomorphic encryption public key to generate the symmetric-key encryption secret key encrypted using homomorphic encryption.

Here, the zero-knowledge proof may be generated to verify whether errors exist in the homomorphic encryption public key and the symmetric-key encryption secret key encrypted using homomorphic encryption.

Here, the symmetric-key encryption secret key encrypted using homomorphic encryption and the zero-knowledge proof may be generated offline.

Accordingly, in the method, apparatus, and computer program for bypassing verification of homomorphic encryption according to an embodiment of the present disclosure, the time required for a zero-knowledge proof for the homomorphic encryption process may be reduced.

In addition, in the method, apparatus, and computer program for bypassing verification of homomorphic encryption according to an embodiment of the present disclosure, the amount of communication required for a zero-knowledge proof for the homomorphic encryption process may be reduced.

In addition, in the method, apparatus, and computer program for bypassing verification of homomorphic encryption according to an embodiment of the present disclosure, the verification process for homomorphic encryption ciphertext may be decomposed into an online process and an offline process through a transciphering framework, and a zero-knowledge proof may be not generated during the online process.

In addition, in the method, apparatus, and computer program for bypassing verification of homomorphic encryption according to an embodiment of the present disclosure, the amount of communication or computation/communication required for the zero-knowledge proof may be reduced depending on whether a transciphering framework is used.

The effects obtainable from the present disclosure are not limited to those mentioned above, and other unmentioned effects will be clearly understood by those skilled in the art to which the present disclosure pertains from the description in this specification.

### BRIEF DESCRIPTION OF THE DRAWINGS

The attached drawings, included as part of the detailed description to aid in understanding the present disclosure, provide embodiments of the present disclosure and explain the technical concept of the present disclosure together with the detailed description.
FIG. 1 illustrates a transciphering framework.
FIG. 2 illustrates a process of verifying a client's encrypting process using homomorphic encryption through zero-knowledge proof technology.
FIG. 3 illustrates a method for bypassing verification of homomorphic encryption according to an embodiment of the present disclosure.
FIG. 4 illustrates a method for bypassing the verification of homomorphic encryption when encrypting using symmetric-key encryption E is in a stream cipher scheme, according to an embodiment of the present disclosure.
FIG. 5 illustrates a method for bypassing the verification of homomorphic encryption when encrypting using symmetric-key encryption E is in a stream cipher scheme and a zero-knowledge proof for a homomorphic encryption public key (HE.pk) is not generated, according to an embodiment of the present disclosure.
FIG. 6 illustrates a method for bypassing verification of homomorphic encryption according to an embodiment of the present disclosure.
FIG. 7 illustrates an apparatus to which the proposed method of the present disclosure may be applied.

### DETAILED DESCRIPTION OF THE EXEMPLARY EMBODIMENTS

Hereinafter, the embodiments disclosed in this specification will be described in detail with reference to the attached drawings. The purpose, specific advantages, and novel features of the present disclosure will become clearer from the following detailed description and preferred embodiments associated with the attached drawings.

In addition, any terms or words used in this specification and claims are appropriately defined by the inventor to best describe his invention and should be interpreted in a sense and concept consistent with the technical concept of the present disclosure, and the terms are intended merely to describe the embodiments and should not be interpreted as limiting the present disclosure.

In assigning reference numerals to components, identical or similar components will be assigned the same reference numeral regardless of the reference numerals, and redundant descriptions thereof will be omitted.

The terms "module" and "unit" used for elements in the following description are assigned or used interchangeably only for the convenience of drafting the specification, and do not have distinct meanings or roles in themselves, and may refer to software or hardware components.

In describing the components of the present disclosure, if a component is expressed in a singular form, it should be understood that the component also includes a plural form unless specifically stated otherwise.

Furthermore, terms such as "first," "second," etc., are used to distinguish one component from another, and the components are not limited to the terms. Furthermore, if a component is connected to another component, it implies that another component may be connected between the two components.

Furthermore, in describing the embodiments disclosed in this specification, detailed descriptions of related prior art will be omitted when it is determined that such detailed descriptions may obscure the subject matter of the embodiments disclosed in this specification. In addition, the attached drawings are intended only to facilitate understanding of the embodiments disclosed in this specification, and the technical concept disclosed in this specification is not limited to the attached drawings, and it should be understood that they include all modifications, equivalents, and substitutions that fall within the concept and technical scope of the present disclosure.

Hereinafter, exemplary embodiments of a method, apparatus, and computer program for context-based document segmentation according to the present disclosure will be described in detail with reference to the attached drawings.

First, the terms used in the present disclosure are briefly summarized.

Homomorphic encryption (HE) is a fourth-generation public-key encryption technology that enables operations between encrypted plaintexts, and is composed of algorithms such as KeyGen^{HE}, EncSK^{HE}(msg, HE.sk), EncPK^{HE}(msg, HE.pk), Dec^{HE}(HE.ctx, HE.sk), and Eval^{HE}(F, HE.ctx, HE.pk), and includes schemes such as BGV(Brakerski-Gentry-Vaikuntanathan), BFV(Brakerski-Fan-Vercauteren), CKKS(Cheon-Kim-Kim-Song), and TFHE(Fast Fully Homomorphic encryption over the Torus).

KeyGen^{HE} is an algorithm that generates a homomorphic encryption secret key (HE.sk) and a public key (HE.pk), and the public key includes not only a public key for encryption but also an additional public key for operations in an encrypted state.

EncSK^{HE}(msg, HE.sk) is an encryption algorithm that uses the secret key (HE.sk) during the homomorphic encryption process and returns the homomorphic encryption ciphertext.

EncPK^{HE}(msg, HE.pk) is an encryption algorithm that uses a public key (HE.pk) during the homomorphic encryption process and returns the homomorphic encryption ciphertext.

Dec^{HE}(HE.ctx, HE.sk) is a decryption algorithm for homomorphic encryption. Here, HE.ctx represents the ciphertext (ctx) of the homomorphic encryption (HE). That is, it is an algorithm that decrypts a homomorphic encryption ciphertext (HE.ctx) using a secret key.

Eval^{HE}(F, HE.ctx, HE.pk) is an algorithm that receives a ciphertext of homomorphic encryption as plaintext and performs operation F on the corresponding plaintext (HE.ctx). If HE.ctx satisfies Dec^{HE}(HE.ctx, HE.sk) = msg, then the resulting ciphertext HE.ctx' of Eval^{HE}(F, HE.ctx, HE.pk) may be expected to be Dec^{HE}(HE.ctx', HE.sk) = F(msg).

For convenience, in this specification, Enc^{HE} (msg, HE.sk) indicates a ciphertext that returns msg when performing decryption using HE.sk, and the algorithm Eval^{HE}(F, HE.ctx, HE.pk), which receives a ciphertext of homomorphic encryption HE.ctx and performs operation F, may be denoted as Eval^{HE}(F).

Zero-knowledge proof (ZKP) is a technology that proves the satisfaction of knowledge or specific statements regarding secret information without revealing the prover's secret information (witness). It is composed of two algorithms: zero-knowledge proof generation and zero-knowledge proof verification, and systems such as Groth16, STARK, and Greco exist.

Transciphering frameworks are technologies to reduce the amount of communication required when transmitting homomorphic encryption using a technique of converting symmetric-key encryption ciphertext into homomorphic encryption ciphertext. Symmetric-key encryption algorithms such as LowMC, Rasta, Masta, and HERA are frequently used in transciphering frameworks.

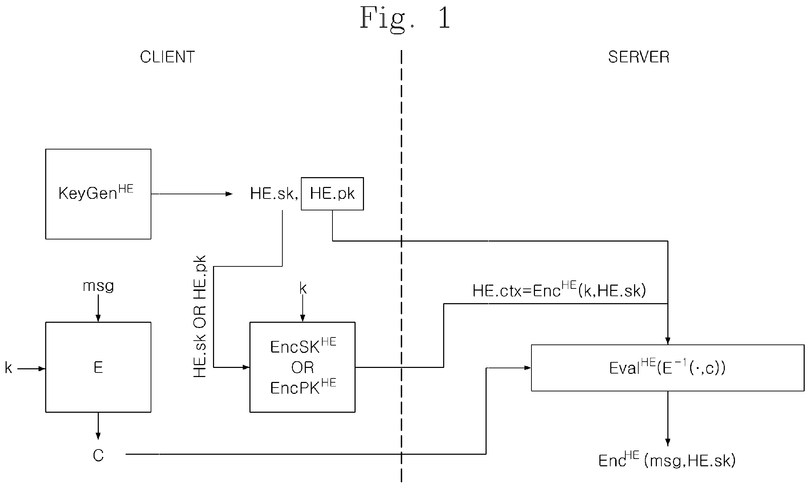

FIG. 1 illustrates a transciphering framework.

In FIG. 1, E(k, msg) is a symmetric-key encryption process and is an algorithm that generates ciphertext c using a symmetric-key encryption secret key k and plaintext msg (e.g., AES encryption, stream encryption algorithm, etc.).

Since the symmetric-key ciphertext c may be converted into Enc^{HE}(msg, HE.sk) through the Eval^{HE}(E⁻¹(·,c)) algorithm on the server, it is possible for the client to send the symmetric-key ciphertext c to the server instead of the homomorphic encryption ciphertext. In other words, when the client transmits the symmetric-key ciphertext c to the server, the server converts the symmetric-key ciphertext c into the homomorphic encryption ciphertext (Enc^{HE}(msg, HE.sk)).

At this time, since Enc^{HE}(k, HE.sk) may be reused after being sent to the server only once, sending the symmetric-key ciphertext c has the effect of reducing the amount of communication, compared to sending the homomorphic encryption ciphertext every time. Here, Enc^{HE} (k, HE.sk) is the homomorphic encryption ciphertext of k.

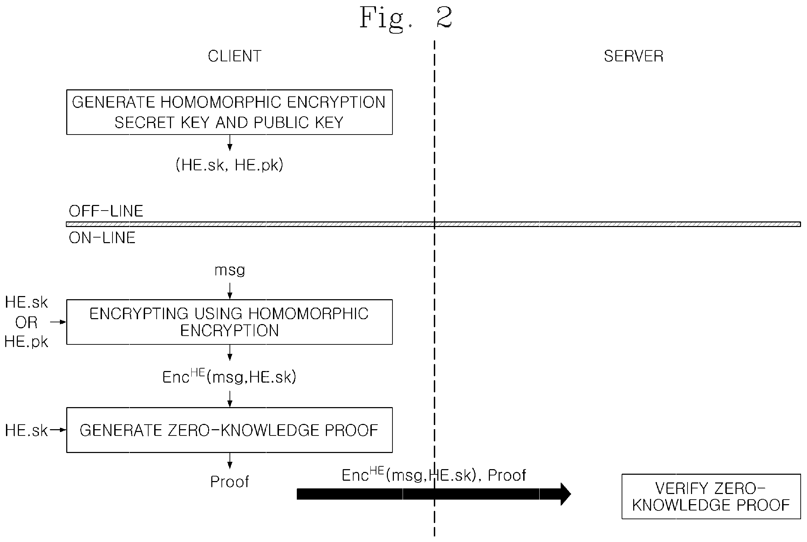

FIG. 2 illustrates a process of verifying a client's encrypting process using homomorphic encryption through zero-knowledge proof technology.

Referring to FIG. 2, the client generates a homomorphic encryption secret key (HE.sk) and a homomorphic encryption public key (HE.pk) offline. Furthermore, the client performs encrypting using homomorphic encryption on a message msg using the generated homomorphic encryption secret key (HE.sk) and homomorphic encryption public key (HE.pk) online, and generates a zero-knowledge proof (Proof) for the encryption result (Enc^{HE}(msg, HE.sk)) using the homomorphic encryption secret key (HE.sk). Then, the client transmits the encryption result (Enc^{HE}(msg, HE.sk)) and the zero-knowledge proof (Proof) to the server, and the server verifies the received zero-knowledge proof (i.e., the server verifies whether the client's encrypting using homomorphic encryption was performed correctly). However, during the verification process using the zero-knowledge proof technology, an inefficiency problem arises in that generating the zero-knowledge proof takes a considerable amount of time (0.6 to 165 seconds: Bottazzi, Enrico. "Greco: Fast Zero-Knowledge Proofs for Valid FHE RLWE Ciphertexts Formation." Cryptology ePrint Archive (2024), Hwang, Intak, et al. "Practical zero-knowledge PIOP for public key and ciphertext generation in (multi-group) homomorphic encryption." Cryptology ePrint Archive (2024)). That is, there is a problem in that it takes a long time to generate a zero-knowledge proof (Proof) using the homomorphic encryption secret key (HE.sk) for the encryption result (Enc^{HE}(msg, HE.sk)) of the message msg. In the description of the present disclosure, encrypting using homomorphic encryption refers to homomorphic encryption (HE).

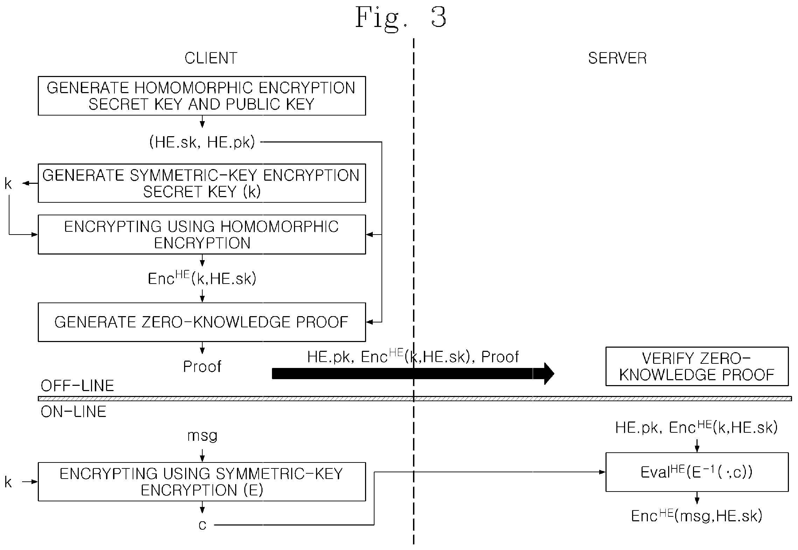

FIG. 3 illustrates a method for bypassing verification of homomorphic encryption according to an embodiment of the present disclosure.

In the embodiment of FIG. 3, the offline operation process will be first described.

The client generates a homomorphic encryption secret key (HE.sk), a homomorphic encryption public key (HE.pk), and a symmetric-key encryption secret key k. Subsequently, the client performs encrypting using homomorphic encryption on the symmetric-key encryption secret key k using the homomorphic encryption secret key (HE.sk) or the homomorphic encryption public key (HE.pk) to generate a symmetric-key encryption secret key encrypted using homomorphic encryption (Enc^{HE}(k, HE.sk)).

Next, the client generates a zero-knowledge proof (Proof) to verify whether the generated homomorphic encryption public key (HE.pk) and symmetric-key encryption secret key encrypted using homomorphic encryption (Enc^{HE}(k, HE.sk)) were correctly generated (verifying whether there are errors in the generated homomorphic encryption public key (HE.pk) and symmetric-key encryption secret key encrypted using homomorphic encryption (Enc^{HE}(k, HE.sk))). Subsequently, the client transmits the homomorphic encryption public key (HE.pk), symmetric-key encryption secret key encrypted using homomorphic encryption (Enc^{HE}(k, HE.sk)), and zero-knowledge proof (Proof) to the server.

The server verifies the received zero-knowledge proof (Proof) for the homomorphic encryption public key (HE.pk) and symmetric-key encryption secret key encrypted using homomorphic encryption (Enc^{HE}(k, HE.sk)) and, if the verification is passed, stores the corresponding data (the zero-knowledge proof (Proof) for the homomorphic encryption public key (HE.pk) and homomorphic encryption encrypted symmetric key (Enc^{HE}(k, HE.sk))).

Next, the online operation process will be described.

The client generates a symmetric-key encryption ciphertext (c = E(k, msg)) for an input message msg using the symmetric-key encryption secret key k.

Subsequently, the client transmits the symmetric-key encryption ciphertext c to the server.

Subsequently, the server performs the Eval^{HE}(E⁻¹(·, c)) algorithm using the symmetric-key encryption ciphertext c and the symmetric-key encryption secret key encrypted using homomorphic encryption (Enc^{HE}(k, HE.sk)) as inputs to obtain a homomorphic encryption encrypted message (Enc^{HE}(msg, HE.sk)).

Through this operational process, the amount of data (communication) sent to the server during the online process is significantly reduced compared to conventional technology. That is, according to conventional technology, the homomorphic encryption ciphertext (Enc^{HE}(msg, HE.sk) ) and the zero-knowledge proof (Proof) are transmitted to the server during the online process; however, according to an embodiment of the present disclosure, only the symmetric-key encryption ciphertext c is transmitted to the server during the online process, thereby significantly reducing the amount of communication.

Since symmetric-key encryption has the nature of 1:1 correspondence encryption, it does not require verification for the encryption. Therefore, even if the client transmits the symmetric-key encryption ciphertext c to the server during the online process, the client does not need to generate a separate proof for the symmetric-key encryption ciphertext c, nor does the server need to separately verify the symmetric-key encryption ciphertext c received.

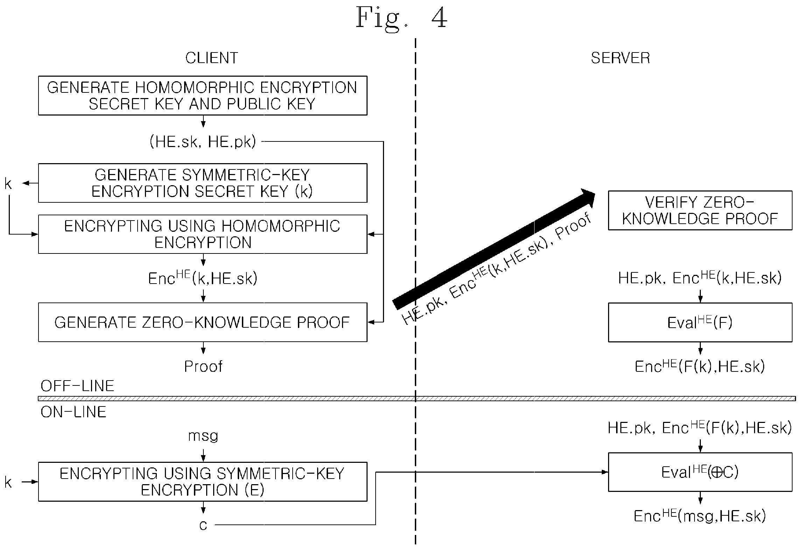

FIG. 4 illustrates a method for bypassing the verification of homomorphic encryption when encrypting using symmetric-key encryption E is in a stream cipher scheme, according to an embodiment of the present disclosure.

In the embodiment of FIG. 3, when encrypting using symmetric-key encryption E is in a stream cipher scheme, that is, when the encrypting using symmetric-key encryption E is in a format separable into a stream generated by the symmetric-key encryption secret key k and a message msg, the Eval^{HE}(E⁻¹(·,c)) operation performed during the online process may be optimized by separating it into a part performed offline and a part performed online. That is, E⁻¹(·,c) may be separated into F(k) and c, and since F(k) is a part unrelated to the message msg, it may be operated offline in advance, and only the addition operation for c may be performed online.

This approach is based on the observation that, in the embodiment of FIG. 3, the computational load of the Eval^{HE}(E⁻¹(·,c)) operation performed on the server is considerably large whenever the symmetric-key encryption ciphertext c is transmitted to the server online. Therefore, Eval^{HE}(F) is performed offline in advance, and only the relatively simple addition operation Eval^{HE}(⊕c) is performed online.

The process will be described in more detail below.

When the symmetric-key encryption scheme is a stream cipher scheme, the symmetric-key encryption algorithm E may be expressed as follows. $E \left(k, msg\right) = F \left(k\right) ⊕ msg$ ${E}^{- 1} \left(k, c\right) = F \left(k\right) ⊕ c$

Here, F(k) is an operation that generates the keystream required for encrypting message msg using a given symmetric-key encryption secret key k, and it is a part that may be performed first regardless of the message msg. Therefore, if Eval^{HE}(F) is performed offline in Eval^{HE}(E⁻¹), only the very simple operation (efficient algorithm) Eval^{HE}(⊕c) related to the message msg may be performed during the online process. That is, when the symmetric-key encryption scheme is a stream encryption scheme, both the computational load and the amount of communication are reduced during the online process, compared to the conventional technology in FIG. 2.

In other words, according to the operation process of the embodiment in FIG. 4, the amount of data (communication) sent to the server during the online process is significantly reduced compared to the conventional technology. That is, according to the conventional technology, the homomorphic encryption ciphertext (Enc^{HE}(msg, HE.sk)) and the zero-knowledge proof (Proof) are transmitted to the server online, whereas according to the embodiment in FIG. 4, the amount of communication is significantly reduced by using the symmetric-key encryption ciphertext c. In addition, since only the Eval^{HE}(⊕c) algorithm related to the message msg is performed during the online process, the amount of computation is significantly reduced compared to the conventional technology.

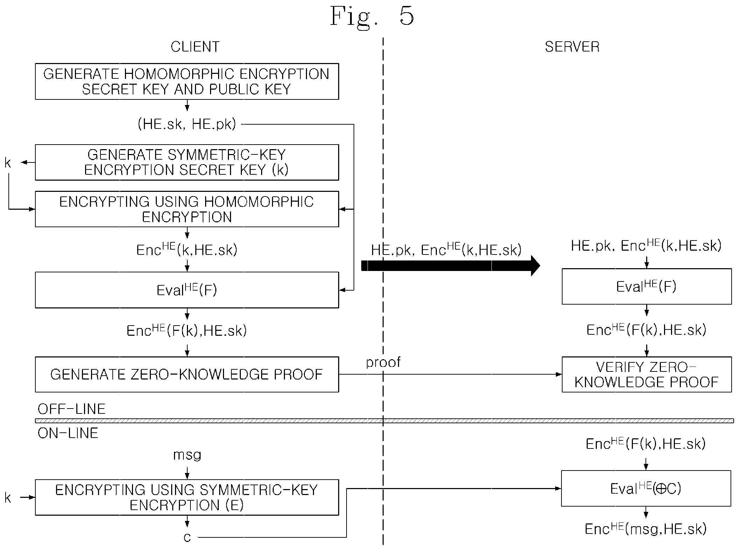

FIG. 5 illustrates a method for bypassing the verification of homomorphic encryption when encrypting using symmetric-key encryption E is in a stream cipher scheme and a zero-knowledge proof for a homomorphic encryption public key (HE.pk) is not generated, according to an embodiment of the present disclosure.

The homomorphic encryption public key (HE.pk) includes multiple public keys for encryption and multiple public keys for Eval^{HE}. Accordingly, the size of the secret information (witness) required to generate a zero-knowledge proof for the homomorphic encryption public key (HE.pk) is large, resulting in a long time required for zero-knowledge proof generation and a large size of the generated zero-knowledge proof.

To resolve these inefficiencies related to the zero-knowledge proof, a method of performing verification on Enc^{HE} (F(k), HE.sk), instead of verifying the homomorphic encryption public key (HE.pk) and Enc^{HE}(k, HE.sk), may be considered. That is, instead of verifying the inputs of Enc^{HE}(F(k), HE.sk), namely the homomorphic encryption public key (HE.pk) and Enc^{HE} (k, HE.sk), verification may be performed on Enc^{HE}(F(k), HE.sk). This is possible because Eval^{HE}(F) is a public algorithm that may be executed on both the client and the server.

However, Enc^{HE}(F(k), HE.sk) is consumed when converting the symmetric-key encryption ciphertext c into Enc^{HE} (msg, HE.sk), so it must be generated and verified as many times as the conversion is performed. Therefore, depending on the number of times the conversion is performed, it is necessary to determine whether to perform verification on the homomorphic encryption public key (HE.pk) and Enc^{HE}(k, HE.sk) (the verification method in FIG. 4) or verification on Enc^{HE}(F(k), HE.sk) (the verification method in FIG. 5) (trade-off). For example, based on a conversion count of 100, the verification method may be determined by using the verification method in FIG. 5 for conversion counts of 100 or fewer, and the verification method in FIG. 4 for conversion counts of 100 or more.

In summary, the two verification methods have a trade-off in that verification of the homomorphic encryption public key (HE.pk) and Enc^{HE}(k, HE.sk) requires relatively more time and computation but is performed only once (the verification method in FIG. 4), whereas verification of Enc^{HE}(F(k), HE.sk) requires relatively less time and computation but is performed multiple times corresponding to the number of conversions of the symmetric-key encryption ciphertext c (the verification method in FIG. 5).

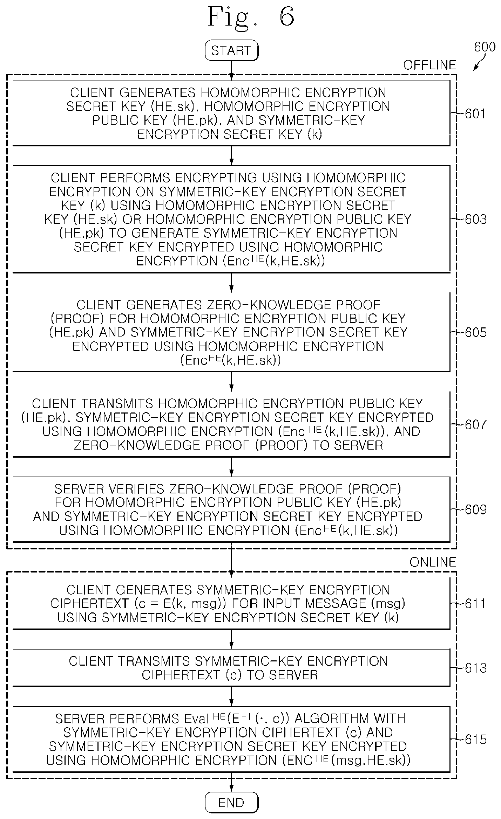

FIG. 6 illustrates a method for bypassing verification of homomorphic encryption according to an embodiment of the present disclosure.

A method 600 for bypassing verification of homomorphic encryption according to an embodiment of the present disclosure includes operation 601 in which a client generates a homomorphic encryption secret key (HE.sk), a homomorphic encryption public key (HE.pk), and a symmetric-key encryption secret key k, operation 603 in which the client performs encrypting using homomorphic encryption on the symmetric-key encryption secret key k using the homomorphic encryption secret key (HE.sk) or the homomorphic encryption public key (HE.pk) to generate a symmetric-key encryption secret key encrypted using homomorphic encryption (Enc^{HE}(k, HE.sk)), operation 605 in which the client generates a zero-knowledge proof (Proof) for the homomorphic encryption public key (HE.pk) and the symmetric-key encryption secret key encrypted using homomorphic encryption (Enc^{HE}(k, HE.sk)), operation 607 in which the client transmits the homomorphic encryption public key (HE.pk), the symmetric-key encryption secret key encrypted using homomorphic encryption (Enc^{HE}(k, HE.sk)), and the zero-knowledge proof (Proof) to a server, and operation 609 in which the server verifies the zero-knowledge proof (Proof) for the homomorphic encryption public key (HE.pk) and the symmetric-key encryption secret key encrypted using homomorphic encryption (Enc^{HE}(k, HE.sk)), operation 611 in which the client generates a symmetric-key encryption ciphertext (c = E(k, msg)) for an input message msg using the symmetric-key encryption secret key k, operation 613 in which the client transmits the symmetric-key encryption ciphertext c to the server, and operation 615 in which the server performs an Eval^{HE}(E⁻¹(·, c)) algorithm with the symmetric-key encryption ciphertext c and the symmetric-key encryption secret key encrypted using homomorphic encryption (Enc^{HE}(k, HE.sk)) as inputs to obtain a message encrypted using homomorphic encryption (Enc^{HE}(msg, HE.sk)). Here, operations 601 through 609 may be performed offline in advance, and operations 611 through 615 may be performed online.

In the present disclosure, there are no specific restrictions on the encrypting using homomorphic encryption, symmetric-key encryption algorithms E, or zero-knowledge proof. However, given that homomorphic encryption ciphertext is transformed from symmetric-key encryption ciphertext, it is desirable that the message (plaintext) space supported by homomorphic encryption and the message (plaintext) space supported by symmetric-key encryption match each other. Additionally, since the zero-knowledge proof is used in the public key generation process of homomorphic encryption or the ciphertext generation process of homomorphic encryption, it is desirable that the space supporting the secret information (witness) or statement of the zero-knowledge proof match the space of the homomorphic encryption ciphertext or the homomorphic encryption public key. For example, the homomorphic encryption may use a BFV scheme (plaintext space: ${Z}_{t}^{l}$), the symmetric-key encryption may use HERA stream cipher, and the zero-knowledge proof may use Greco.

The present disclosure may be utilized in the design of the oblivious pseudo random function (OPRF) protocol when operating the PRF using homomorphic encryption.

In addition, verification of the homomorphic encryption ciphertext provided by the client is required to prepare for the case where the client providing the OPRF input value is a malicious adversary. The present disclosure may be utilized for such verification.

Furthermore, when homomorphic encryption is utilized as an element technology of a secure multiparty computation protocol, in order to defend against malicious adversaries, it is necessary to verify that the party providing the homomorphic encryption ciphertext is providing a valid homomorphic ciphertext. The present disclosure may be utilized for such verification.

### Device to which proposed method of present disclosure is applicable

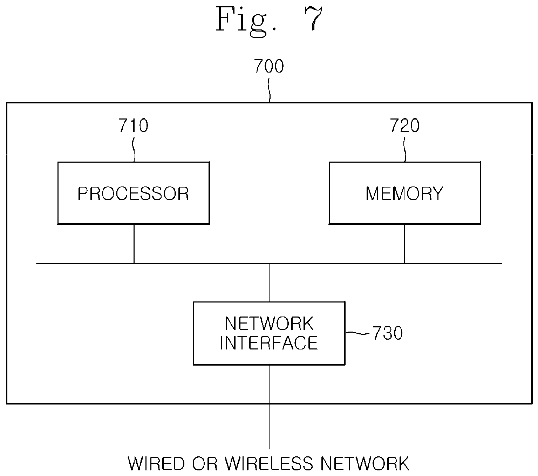

FIG. 7 illustrates an apparatus 700 to which the proposed method of the present disclosure may be applied. The apparatus 700 may refer to a server or terminal that performs a method of bypassing the verification of homomorphic encryption.

Referring to FIG. 7, the apparatus 700 may be a server device or a terminal device configured to implement a process for a method to bypass the verification of homomorphic encryption.

For example, an apparatus 700 to which the proposed method of the present disclosure may be applied may include network devices such as repeaters, hubs, bridges, switches, routers, gateways, and the like, computer devices such as desktop computers, workstations, etc., mobile terminals such as smartphones, etc., portable devices such as laptop computers, etc., home appliances such as digital TVs, etc., and means of transportation such as automobiles, etc. As another example, the apparatus 700 to which the present disclosure may be applied may be included as part of an ASIC (Application Specific Integrated Circuit) implemented in the form of an SoC (System-on-Chip).

A memory 720 may be connected to a processor 710 during operation, and may store programs and/or instructions for processing and controlling the processor 710, and may store data and information used in the present disclosure, control information required for processing data and information according to the present disclosure, and temporary data generated during the data and information processing process. The memory 720 may be implemented as a storage device such as a ROM (Read-Only Memory), a RAM (Random Access Memory), an EPROM (Erasable Programmable Read-Only Memory), an EEPROM (Electrically Erasable Programmable Read-Only Memory), a flash memory, a SRAM (Static RAM), an HDD (Hard Disk Drive), an SSD (Solid State Drive), and the like.

The processor 710 may be operatively connected to the memory 720 and/or a network interface 730, and may control the operation of respective modules in the apparatus 700. In particular, the processor 710 may perform various control functions for performing the proposed method of the disclosure. The processor 710 may also be called a controller, a microcontroller, a micro-processor, a micro-computer, or the like. The proposed method of the present disclosure may be implemented by hardware, firmware, software, or a combination thereof. When implementing the present disclosure using hardware, an ASIC (application specific integrated circuit) or a DSP (digital signal processor), a DSPD (digital signal processing device), a PLD (programmable logic device), an FPGA (field programmable gate array), or the like, configured to perform the present disclosure, may be provided in the processor 710. Meanwhile, when implementing the proposed method of the present disclosure using firmware or software, the firmware or software may include instructions related to modules, procedures, or functions that perform functions or operations necessary for implementing the proposed method of the present disclosure, and the instructions may be stored in the memory 720 or stored in a computer-readable recording medium (not shown) separate from the memory 720, and may be configured to cause, when executed by the processor 710, the apparatus 700 to perform the proposed method of the present disclosure.

In addition, the apparatus 700 may include a network interface device 730. The network interface device 730 may be connected to the processor 710 during operation, and the processor 710 may control the network interface device 730 to transmit or receive wireless/wired signals carrying information, data, signals, and/or messages through a wireless/wired network. The network interface device 730 may support various communication standards such as IEEE 802 series, 3GPP LTE(-A), 3GPP 5G, etc., and may transmit and receive control information and/or data signals according to the corresponding communication standards. The network interface device 730 may be implemented outside the apparatus 700 as needed.

The embodiments described in this specification and the attached drawings are merely exemplary and do not limit the scope of the disclosure in any way. In addition, the connection lines or connection members between the components illustrated in the drawings are examples of functional connections and/or physical or circuit connections, and may be represented as various functional connections, physical connections, or circuit connections that are replaceable or addible in an actual device. In addition, unless specifically stated with "essential," "important," etc., the components may not be essential for the application of the present disclosure.

In the specification (especially, in the claims) of the present disclosure, the term "said" and indicative terms similar thereto may be used for both a single element or multiple elements. In addition, if a range is stated in the disclosure, it encompasses embodiments to which respective values within the range are applied (unless otherwise stated), and the respective values constituting the range are regarded as being described in the detailed description of the present disclosure. In addition, the operations presented in the method of the disclosure are not intended to be restricted in their sequence, and the sequence thereof may be appropriately changed as needed, unless a certain operation must precede according to the nature of the process. All examples or the use of exemplary terms (e.g., etc.) in the disclosure is merely intended to described the disclosure in detail, and the scope of the disclosure is not limited to the examples or exemplary terms, unless limited by the claims. In addition, those skilled in the art will understand that various modifications, combinations, and changes may be configured according to design conditions and elements without departing from the scope of the appended claims or their equivalents.

## Claims

1. A method for bypassing verification of homomorphic encryption, the method comprising:
verifying a zero-knowledge proof for a homomorphic encryption public key and a symmetric-key encryption secret key encrypted using homomorphic encryption; and
obtaining a homomorphic encryption message by performing a first operation with a symmetric-key encryption ciphertext (c) and the symmetric-key encryption secret key encrypted using homomorphic encryption as inputs.

2. The method of claim 1,
wherein the verifying of the zero-knowledge proof is performed offline, and
wherein the obtaining of the homomorphic encryption message is performed online.

3. The method of claim 1,
wherein the symmetric-key encryption ciphertext is obtained by encrypting an input message through the symmetric-key encryption secret key.

4. The method of claim 1,
wherein the first operation is an Eval^{HE}(E⁻¹(·, c)) algorithm operation.

5. The method of claim 1,
wherein the symmetric-key encryption secret key encrypted using homomorphic encryption is generated by:
generating a homomorphic encryption secret key, the homomorphic encryption public key, and the symmetric-key encryption secret key; and
performing homomorphic encryption on the symmetric-key encryption secret key through the homomorphic encryption secret key or the homomorphic encryption public key to generate the symmetric-key encryption secret key encrypted using homomorphic encryption.

6. The method of claim 1,
wherein the zero-knowledge proof is generated to verify whether errors exist in the homomorphic encryption public key and the symmetric-key encryption secret key encrypted using homomorphic encryption.

7. The method of claim 6,
wherein the symmetric-key encryption secret key encrypted using homomorphic encryption and the zero-knowledge proof are generated offline.

8. A method for bypassing verification of homomorphic encryption, the method comprising:
verifying a zero-knowledge proof for a homomorphic encryption public key and a symmetric-key encryption secret key encrypted using homomorphic encryption;
generating a keystream generation operation (F) encrypted using homomorphic encryption by performing a second operation with the symmetric-key encryption secret key encrypted using homomorphic encryption as an input; and
obtaining a homomorphic encryption message by performing a third operation with a symmetric-key encryption ciphertext (c) and the keystream generation operation encrypted using homomorphic encryption as inputs.

9. A method for bypassing verification of homomorphic encryption, the method comprising:
performing a second operation with a symmetric-key encryption secret key encrypted using homomorphic encryption as an input to generate a keystream generation operation (F) encrypted using homomorphic encryption;
verifying a zero-knowledge proof for the keystream generation operation encrypted using homomorphic encryption; and
obtaining a homomorphic encryption message by performing a third operation with a symmetric-key encryption ciphertext (c) and the keystream generation operation encrypted using homomorphic encryption as inputs.

10. An apparatus for executing a method of bypassing verification of homomorphic encryption, the apparatus comprising a processor,
wherein the processor is configured to:
verify a zero-knowledge proof for a homomorphic encryption public key and a symmetric-key encryption secret key encrypted using homomorphic encryption; and
obtain a homomorphic encryption message by performing a first operation with a symmetric-key encryption ciphertext (c) and the symmetric-key encryption secret key encrypted using homomorphic encryption as inputs.

11. The apparatus of claim 10,
wherein the verifying of the zero-knowledge proof is performed offline, and
wherein the obtaining of the homomorphic encryption message is performed online.

12. The apparatus of claim 10,
wherein the symmetric-key encryption ciphertext is obtained by encrypting an input message through the symmetric-key encryption secret key.

13. The apparatus of claim 10,
wherein the first operation is an Eval^{HE}(E⁻¹(·, c)) algorithm operation.

14. The apparatus of claim 10,
wherein the symmetric-key encryption secret key encrypted using homomorphic encryption is generated by:
generating a homomorphic encryption secret key, the homomorphic encryption public key, and the symmetric-key encryption secret key; and
performing homomorphic encryption on the symmetric-key encryption secret key through the homomorphic encryption secret key or the homomorphic encryption public key to generate the symmetric-key encryption secret key encrypted using homomorphic encryption.

15. The apparatus of claim 10,
wherein the zero-knowledge proof is generated to verify whether errors exist in the homomorphic encryption public key and the symmetric-key encryption secret key encrypted using homomorphic encryption.
